# EUROPÄISCHE PATENTANMELDUNG

(11) **EP 4 113 273 A1**
(43) Veröffentlichungstag der Anmeldung: **04.01.2023**
(21) Anmeldenummer: 21183084.9
(22) Anmeldetag: 01.07.2021
(51) Int. Cl.: G06F 3/16

(54) **DENTALGERÄTESYSTEM**

(71) Anmelder: Ivoclar Vivadent AG, 9494 Schaan (LI)
(72) Erfinder: JUSSEL, Rudolf, 6800 Feldkirch (AT); SCHÄDLER, Sebastian, 9497 Triesenberg (LI)
(74) Vertreter: Baldus, Oliver

(57) **Zusammenfassung**

Die vorliegende Erfindung betrifft ein Dentalgerätesystem (200), mit einer Eingabeschnittstelle (101-I) zum Eingeben einer sprachlichen Benutzereingabe (INPUT); einer elektronischen Verarbeitungsvorrichtung (103) zum Ermitteln einer sprachlichen Benutzerausgabe (OUTPUT) auf Basis der Benutzereingabe (INPUT); und einer Ausgabeschnittstelle (101-O) zum Ausgeben der sprachlichen Benutzerausgabe (OUTPUT).

## Beschreibung

Die vorliegende Erfindung betrifft ein Dentalgerätesystem mit einer Eingabeschnittstelle zum Eingeben einer sprachlichen Benutzereingabe, ein Dentalgerät einer Eingabeschnittstelle zum Eingeben einer sprachlichen Benutzereingabe und Verfahren für ein Dentalgerätesystem.

Im Falle von Problemen und Fragen bei einer Handhabung eines Dentalgeräts stehen dem Benutzer derzeit mehrere Möglichkeiten zur Verfügung, wie beispielsweise das Lesen von Bedienungsanleitungen, eine Suche von Lösungsvorschlägen im Internet, eine telefonische Anfrage oder ein E-Mail-Kontakt zum Vertriebspartner oder ein Befragen von Kollegen. Diese Möglichkeiten sind jedoch zeitaufwändig. In diesen Fällen sind die Benutzer immer wieder gefordert, eine möglichst genaue Problembeschreibung zu erfassen. Werden zu wenig Informationen erfasst, so führen weitere Rückfragen und erneute Beobachtungsintervalle zu Verzögerungen in der Problemlösung.

Obwohl ein persönlicher Kundensupport für komplexe Problemfälle geeignet ist, ist dieser sehr aufwendig. Zudem führt der persönliche Kundensupport zu einem hohen Kommunikationsaufwand und zu darin begründeten Informationsverlusten. Daneben ist es für Supportmitarbeiter nahezu unmöglich, alle Fachgebiete bis ins Detail zu beherrschen. Dies führt einem hohen Kommunikationsaufwand, Verzögerungen und dem Verlust von Informationen. Dieser Kommunikationsaufwand sollte vermieden werden. Weiter sind Informationen sehr unflexibel und eine individuelle Problemberatung ist besonders bei komplexen Problemfällen schwierig.

Andere Möglichkeiten, dem Kunden zu helfen, liegen im Ausbau von Servicehotlines und in ausführlichen Arbeitsanweisungen, Bedienungsanleitungen, Fragenkatalogen und Kundeninformationen. Lösungsversuche, das Nutzungsverhalten der Kunden besser zu verstehen, beruhen auf einem direkten Dialog, einem Besuch der Kunden vor Ort, einem Einsatz von Marktforschungstools und Wettbewerbsanalysen.

Es ist die technische Aufgabe der vorliegenden Erfindung, ein Dentalgerätesystem bereitzustellen, mit dem ein Benutzer in kurzer Zeit zutreffende Antworten für eine Handhabung eines Dentalgerätes erhalten kann.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Dentalgerätesystem gelöst, mit einer Eingabeschnittstelle zum Eingeben einer sprachlichen Benutzereingabe; einer elektronischen Verarbeitungsvorrichtung zum Ermitteln einer sprachlichen Benutzerausgabe auf Basis der Benutzereingabe; und einer Ausgabeschnittstelle zum Ausgeben der sprachlichen Benutzerausgabe. Das Dentalgerätesystem ist ein System, in das ein Dentalgerät eingebunden ist. Das Dentalgerät kann beispielsweise über das Internet in das Dentalgerätesystem eingebunden sein. Die elektronische Verarbeitungsvorrichtung kann eine sprachliche Analyse oder Interpretation der Benutzereingabe durchführen. Hierdurch kann eine Benutzereingabe verstanden werden, bevor eine sprachliche Benutzerausgabe ermittelt und ausgegeben wird. Über das so ausgestaltete Dentalgerätesystem kann ein Chatbot realisiert werden, über den der Benutzer eine sprachliche Hilfestellung erhalten kann. Der Chatbot dient als Konversationsagent oder elektronischer Gesprächspartner in Form eines Computerprogramms, das mit Menschen über natürliche Sprache kommuniziert. Die sprachliche Benutzereingabe und die sprachliche Benutzerausgabe können dabei als Text, Sprache, Code oder Symbol erfolgen. Die Verarbeitungsvorrichtung kann einen selbstlernenden Algorithmus umfassen, um eine bessere Benutzerausgabe zur Benutzereingabe zu erhalten. Der selbstlernende Algorithmus kann auf Basis einer Vielzahl von Benutzereingaben angelernt werden. Ein weiterer Vorteil ist, dass das Dentalgerätesystem in der Sprache des Benutzers kommunizieren kann.

In einer technisch vorteilhaften Ausführungsform des Dentalgerätesystems ist die elektronische Verarbeitungsvorrichtung, die Eingabeschnittstelle und/oder die Ausgabeschnittstelle in einem Dentalgerät gebildet. Dadurch wird beispielsweise der technische Vorteil erreicht, dass die Eingabeschnittstelle und/oder die Ausgabeschnittstelle direkt an einem Ort der Bedienung des Dentalgeräts gebildet sind.

In einer weiteren technisch vorteilhaften Ausführungsform des Dentalgerätesystems ist die Verarbeitungsvorrichtung auf einem Internetknoten gebildet. Dadurch wird beispielsweise der technische Vorteil erreicht, dass sich der technische Aufwand an dem Dentalgerät vermindert und die Benutzereingaben zentral verarbeitet und verwaltet werden können. Ein selbstlernender Algorithmus (Machine Learning) kann aus einer Vielzahl von Benutzereingaben lernen, die über unterschiedliche Eingabeschnittstellen erfasst worden sind. Zudem kann der selbstlernende Algorithmus eine Interpretation von Fragen auf Basis der Benutzereingabe durchführen.

In einer weiteren technisch vorteilhaften Ausführungsform des Dentalgerätesystems ist die Verarbeitungsvorrichtung ausgebildet, eine Funktion eines Dentalgerätes auf Basis der sprachlichen Benutzereingabe zu steuern. Dadurch wird beispielsweise der technische Vorteil erreicht, dass das Dentalgerät auf einfache Weise bedient werden kann.

In einer weiteren technisch vorteilhaften Ausführungsform des Dentalgerätesystems ist die Verarbeitungsvorrichtung ausgebildet, Zustandsdaten des Dentalgerätes auf Basis der sprachlichen Benutzereingabe an die Ausgabeschnittstelle zu senden. Dadurch wird beispielsweise ebenfalls der technische Vorteil erreicht, dass ein Zustand des Dentalgerätes auf einfache Weise abgerufen oder weitergeleitet werden kann.

In einer weiteren technisch vorteilhaften Ausführungsform des Dentalgerätesystems umfasst die Verarbeitungsvorrichtung ein neuronales Netz oder ein Expertensystem zum Ermitteln der sprachlichen Benutzerausgabe auf Basis der Benutzereingabe. Dadurch wird beispielsweise der technische Vorteil erreicht, dass die Benutzerausgabe auf einfache und schnelle Weise ermittelt werden kann.

In einer weiteren technisch vorteilhaften Ausführungsform des Dentalgerätesystems ist die Eingabeschnittstelle eine textbasierte, visuelle, eine gestische oder eine sprachbasierte Schnittstelle und/oder die Ausgabeschnittstelle ist eine textbasierte, visuelle oder eine sprachbasierte Schnittstelle. Die gestische Eingabeschnittstellekann beispielsweise eine elektronische Kamera umfassen, mit der die Gesten des Benutzers erfasst werden können. Im Allgemeinen können die Gesten eines Benutzers aber auch auf andere Weise erfasst werden. Dadurch wird beispielsweise ebenfalls der technische Vorteil erreicht, dass besonders geeignete Schnittstellen verwendet werden.

In einer weiteren technisch vorteilhaften Ausführungsform des Dentalgerätesystems ist das Dentalgerät eine Fräsgerät, ein 3D-Drucker, ein Brennofen; ein Pressofen, ein Sinterofen, ein Scanner, ein Lichthärtegerät, ein Nachbelichtungsgerät, ein Mischsystem, ein Farbmesssystem, ein Polymerisationsgerät, ein Sterilisationsgerät, ein Handstück des Zahntechnikers oder ein Reinigungsgerät. Dadurch wird beispielsweise ebenfalls der technische Vorteil erreicht, dass besonders geeignete Dentalgeräte in das Dentalsystem integriert werden können.

Gemäß einem zweiten Aspekt wird die technische Aufgabe durch ein Dentalgerät gelöst, mit einer Eingabeschnittstelle zum Eingeben einer sprachlichen Benutzereingabe; einer elektronischen Verarbeitungsvorrichtung zum Ermitteln einer sprachlichen Benutzerausgabe auf Basis der Benutzereingabe; und einer Ausgabeschnittstelle zum Ausgeben der sprachlichen Benutzerausgabe. Durch das Dentalgerät werden die gleichen technischen Vorteile wie durch das Dentalgerätesystem nach dem ersten Aspekt erreicht.

Gemäß einem dritten Aspekt wird die technische Aufgabe durch ein Verfahren für ein Dentalgerätesystem gelöst, mit den Schritten eines Eingebens einer sprachlichen Benutzereingabe über eine Eingabeschnittstelle; eines Ermittelns einer sprachlichen Benutzerausgabe auf Basis der Benutzereingabe durch eine elektronischen Verarbeitungsvorrichtung; und eines Ausgebens der sprachlichen Benutzerausgabe über eine Ausgabeschnittstelle. Durch das Verfahren werden die gleichen technischen Vorteile wie durch das Dentalgerätesystem nach dem ersten Aspekt erreicht.

In einer technisch vorteilhaften Ausführungsform des Verfahrens wird eine Funktion eines Dentalgerätes auf Basis der sprachlichen Benutzereingabe gesteuert. Dadurch wird beispielsweise ebenfalls der technische Vorteil erreicht, dass das Dentalgerät auf einfache Weise bedient werden kann.

In einer weiteren technisch vorteilhaften Ausführungsform des Verfahrens werden Zustandsdaten des Dentalgerätes auf Basis der sprachlichen Benutzereingabe an die Ausgabeschnittstelle gesendet und/oder Sensordaten des Dentalgerätes in der Benutzereingabe integriert. Dadurch wird beispielsweise ebenfalls der technische Vorteil erreicht, dass ein Zustand des Dentalgerätes auf einfache Weise abgerufen werden kann.

In einer weiteren technisch vorteilhaften Ausführungsform des Verfahrens verbindet sich das Dentalgerät in Reaktion auf die sprachlichen Benutzereingabe automatisch mit einem Serviceknoten. Dadurch wird beispielsweise der technische Vorteil erreicht, dass ein Servicetechniker mit einer technischen Dokumentation der Fehleranalyse den Benutzer bei der Bedienung des Dentalgerätes unterstützen kann.

In einer weiteren technisch vorteilhaften Ausführungsform des Verfahrens wird die sprachliche Benutzereingabe an eine Verarbeitungsvorrichtung auf einem Internetknoten gesendet und/oder die sprachliche Benutzerausgabe wird von einem Internetknoten empfangen.

In einer weiteren technisch vorteilhaften Ausführungsform des Verfahrens wird die sprachliche Benutzerausgabe oder die Benutzereingabe durch ein neuronales Netz oder ein Expertensystem auf Basis der Benutzereingabe ermittelt. Dadurch wird beispielsweise ebenfalls der technische Vorteil erreicht, dass die Benutzerausgabe auf einfache und schnelle Weise ermittelt werden kann.

Ausführungsbeispiele der Erfindung sind in den Zeichnungen dargestellt und werden im Folgenden näher beschrieben.

Es zeigen:
- Fig. 1: eine schematische Ansicht eines Dentalgerätsystems;
- Fig. 2: eine schematische Darstellung eines neuronalen Netzes;
- Fig. 3: ein visuelles Angebot einen Chatbot am Dentalgerät in Anspruch zu nehmen; und
- Fig. 4: ein Blockdiagramm eines Verfahrens für ein Dentalgerätesystem.

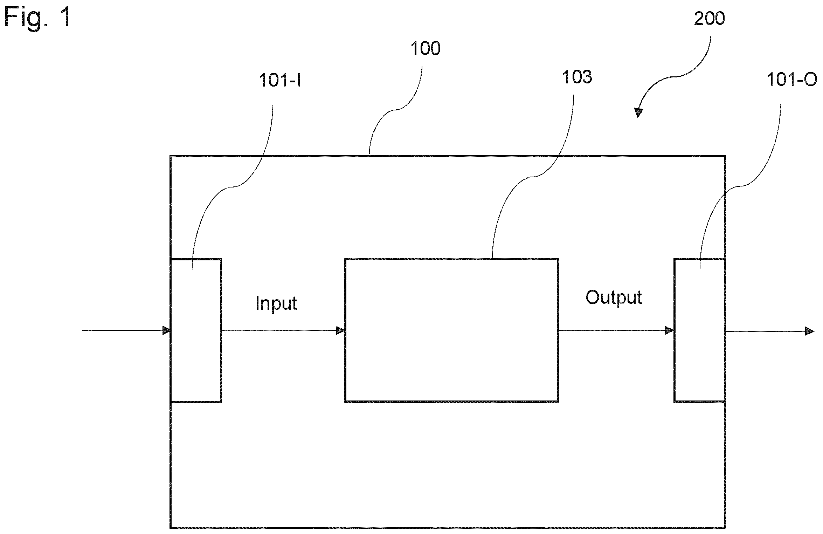

Fig. 1 zeigt eine schematische Ansicht eines Dentalgerätesystems 200. Das Dentalgerätsystem 200 umfasst eine Eingabeschnittstelle 101-I zum Eingeben einer sprachlichen Benutzereingabe INPUT. Eine elektronische Verarbeitungsvorrichtung 103 dient zum Ermitteln einer sprachlichen Benutzerausgabe OUTPUT auf Basis der Benutzereingabe INPUT. Eine Ausgabeschnittstelle 101-O dient zum Ausgeben der sprachlichen Benutzerausgabe OUTPUT.

Die sprachliche Benutzereingabe INPUT ist ein Mittel zur Eingabe von Anweisungen und Fragen eines menschlichen Benutzers. Die sprachliche Benutzereingabe INPUT kann beispielsweise vom Benutzer in Textform, in Form von Symbolen und Piktogrammen oder in verbaler Form über gesprochene Wörter erfolgen. Die Eingabeschnittstelle 101-I für den Benutzer wird beispielsweise durch eine berührungsempfindliche Anzeige (Display) mit einer Eingabetastatur gebildet, um einen Text als die sprachliche Benutzereingabe INPUT einzugeben. Die Eingabeschnittstelle 101-I kann auch durch ein Mikrofon gebildet werden, um gesprochene Wörter als sprachliche Benutzereingabe INPUT einzugeben.

Die sprachliche Benutzereingabe INPUT wird in dem Dentalgerätesystem 200 in digitaler Form an die elektronische Verarbeitungsvorrichtung 103 übermittelt. Die elektronische Verarbeitungsvorrichtung 103 analysiert die sprachliche Benutzereingabe INPUT und erzeugt daraufhin eine sprachliche Benutzerausgabe OUTPUT. Die Analyse der sprachlichen Benutzereingabe INPUT kann über eine Text- oder eine Spracherkennung mittels eines Algorithmus erfolgen. Zu diesem Zweck umfasst die elektronische Verarbeitungsvorrichtung 103 einen digitalen Prozessor und einen digitalen Speicher, die zusammen ein entsprechendes Analyse-Computerprogramm ausführen.

Die Benutzerausgabe 101-O wird beispielsweise durch ein künstliches neuronales Netz 105 oder ein Expertensystem auf Basis der Benutzereingabe INPUT ermittelt. Das künstliche neuronales Netz 105 ist durch Algorithmen implementiert, die dem menschlichen Gehirn nachempfunden sind. Dieses abstrahierte Modell von verbundenen künstlichen Neuronen, ermöglicht es, komplexe sprachlichen Benutzereingaben INPUT zu bearbeiten und eine geeignete Benutzerausgabe OUTPUT zu ermitteln. Die Algorithmen werden in einem digitalen Speicher (RAM) der Verarbeitungsvorrichtung 103 gespeichert und von einem geeigneten Prozessor (CPU/GPU/TPU) oder Cloud der Verarbeitungsvorrichtung 103 ausgeführt.

Das Expertensystem ist demgegenüber ein Computerprogramm, das Menschen bei der Lösung komplexerer Probleme wie ein Experte unterstützen kann, indem es Handlungsempfehlungen auf Basis der Benutzereingabe INPUT aus einer Wissensbasis ableitet. Über sogenannte Wenn-dann-Beziehungen kann das menschliche Wissen für Computer verständlich dargestellt werden (Wissensbasis). Diese Wenn-dann-Beziehungen können in einer Datenbank der Verarbeitungsvorrichtung 103 gespeichert sein. Wenn eine vorgegebene Benutzereingabe INPUT durch die Eingabeschnittstelle 101-I erfasst wird, denn ermittelt die Verarbeitungsvorrichtung 103 auf Basis der Benutzereingabe INPUT die zugeordnete sprachliche Benutzerausgabe OUTPUT. Über die Ausgabeschnittstelle 101-O wird die sprachliche Benutzerausgabe OUTPUT ausgegeben.

Das Expertensystem enthält die selbstlernende Funktionalität, um die Wissensbasis zu erstellen und zu verbessern (Wissenserwerbskomponente), zu verarbeiten (Problemlösungskomponente) und dem Benutzer verständlich zu machen (Erklärungskomponente).

Das Experten- oder Supportsystem braucht nicht von Experten betreut oder verbessert zu werden, da dieses über die Möglichkeit verfügt, aus der Erfahrung der Benutzer zu lernen. Die Entwicklung beschränkt sich somit auf eine technische Administration der Infrastruktur und nicht des Inhaltes. Die Administration der zusätzlichen Inhalte beschränkt sich auf die Moderation oder die Freigabe.

Im Allgemeinen können jedoch auch andere Algorithmen im Bereich des maschinellen Lernens oder der künstlichen Intelligenz (AI - Artificial Intelligence) eingesetzt werden, um die Benutzerausgabe OUTPUT auf Basis der Benutzereingabe INPUT zu erzeugen. Hierbei können selbstlernende Algorithmen verwendet werden.

Die so erzeugte sprachliche Benutzerausgabe OUTPUT wird anschließend von der Verarbeitungsvorrichtung 103 an die Ausgabeschnittstelle 101-O übermittelt, die ebenfalls durch eine Anzeige (Display) oder einen Lautsprecher gebildet sein kann.

Durch das Dentalgerätesystem 200 kann eine funktionelle technische Ergänzung zu bestehenden Angeboten wie Fragenkatalogen oder Service-Hotlines gebildet werden. Fragenkataloge haben beispielsweise den Nachteil, dass diese oftmals kein passendes Angebot haben und es aufwändig ist, die gewünschten Informationen zu liefern. Service-Hotlines sind außerhalb der Geschäftszeiten oftmals nicht besetzt oder während der Geschäftszeiten schwer erreichbar.

Durch den Chatbot, der von dem Dentalgerätesystem 200 integriert wird, kann jedoch ein ununterbrochener Support und eine schnelle Hilfe im Falle von technischen Problemen für das Dentalgerät 100 realisiert werden. Dabei werden Servicestellen entlastet, da Probleme schnell und unkompliziert durch den Chatbot gelöst werden können. Erfasste sprachliche Benutzereingaben INPUT können im Falle eines nicht direkt lösbaren Problems einem Experten einer Servicestelle zugeleitet werden, der hilft eine auf das Problem zugeschnittene Lösung zu finden. Zu diesem Zweck verbindet sich das Dentalgerät 100 in Reaktion auf die sprachlichen Benutzereingabe INPUT automatisch mit einem Serviceknoten, der durch einen ferngelegenen Computer im Internet gebildet sein kann und von einem Experten bedient wird.

Ein weiterer Vorteil ist, dass das Dentalgerätesystem 200 in der Sprache der Anwender kommunizieren kann. Darüber hinaus kann der Chatbot auch für ein personalisiertes Erlebnis sprachlich an eigene Präferenzen angepasst werden (männlich, weiblich). Zudem könnte sich der Chatbot an vorangegangene Benutzereingaben oder Unterhaltungen erinnern. Zu diesem Zweck könnte der Chatbot persönliche Details des Benutzers abfragen, sich merken und wieder in die Konversation einbauen.

Der Chatbot kann sich automatisch bei Fehlermeldungen des Dentalgeräts melden oder aktiviert werden, so dass in diesem Fall zeitnah eine sprachliche Benutzereingabe erfolgen kann. Zusätzlich kann eine Meldung an ein Mobiltelefon übermittelt werden und von diesem ausgegeben werden. Die Benutzereingabe kann zusätzlich Statusinformationen und Sensorinformationen des Dentalgerätes umfassen.

Der Benutzer hat daher die Zeit den Inhalt der sprachlichen Benutzerausgabe OUTPUT zu verstehen und eventuellen Anweisungen zu folgen.

Dem Chatbot können weitere Medien, wie Bilddaten, Videos, Sprache oder ein Geräte-Status zur Verfügung stehen, aus denen zusätzliche Informationen gewonnen werden. Anweisungen für eine Benutzerausgabe OUTPUT können zudem als Bild oder Videosequenz vorliegen. Die Übertragung von Bildern hat einen intuitiven Vorteil gegenüber Sprachsystemen, die Information nur in Sprache ein- und ausgeben.

Genauso wie bei der Kommunikation mit einem Supportmitarbeiter kann auch bei der Kommunikation mit dem Chatbot auf Bilder verwiesen werden. Der Chatbot ist in der Lage, diese Bilder zu analysieren und nach den relevanten Informationen zu filtern. Dadurch wird es dem Benutzer erleichtert, eine detaillierte Problembeschreibung zu erfassen.

Der Chatbot kann in dem Dentalgerät 100 integriert sein. Das Dentalgerät 100 ist beispielsweise ein Fräsgerät, ein 3D-Drucker, ein Brennofen; ein Pressofen, ein Sinterofen, ein Scanner, ein Lichthärtegerät, ein Nachbelichtungsgerät, ein Mischsystem, ein Farbmesssystem, ein Polymerisationsgerät, ein Sterilisationsgerät, ein Handstück des Zahntechnikers oder ein Reinigungsgerät. Durch Displays dieser Deantalgeräte und mit der zunehmenden Anbindung dieser Dentalgeräte 100 an das Internet oder Cloud-Dienste stehen der Zugriff auf Datenbanken oder andere Ressourcen für die Realisierung des Chatbots zur Verfügung. Die sprachliche Benutzereingabe INPUT kann aber auch an eine Verarbeitungsvorrichtung 103 auf einem Internetknoten gesendet werden, von dem die erzeugte, sprachliche Benutzerausgabe OUTPUT Internetknoten empfangen wird. Die sprachliche Benutzereingabe INPUT oder die sprachliche Benutzerausgabe OUTPUT für den Dialog des Benutzers können auch über ein mobiles Gerät, wie beispielsweise an einem Tablet-PC oder einem Mobiltelefon. Diesen Dentalgeräten 100 stehen oftmals, wenn diese in komplexe Arbeitsabläufe eingebunden sind oder komplexe Aufgaben lösen sollen, ein modernes Touchdisplay als Benutzerschnittstelle (UI - User Interface) zur Verfügung.

Nicht alle Dentalgeräte 100 können jedoch ans Internet angeschlossen werden und eine Verbindung ist nicht immer und überall ausreichend stabil. Dennoch können einfache Chatbots ohne Internet lokal am Gerät realisiert werden. Auch wenn ein Benutzer dann nicht von den zentralen Daten anderer Benutzer profitieren kann, können diese mit dem nächsten Software-Update verwendet werden.

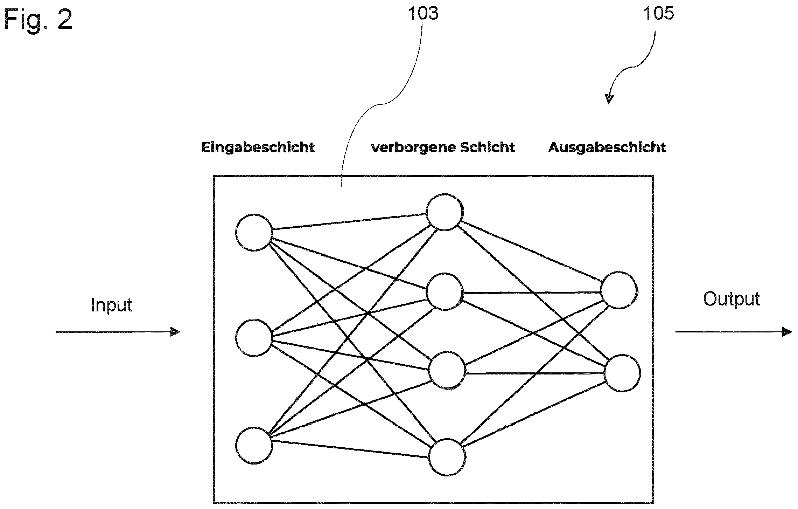

Fig. 2 zeigt eine schematische Darstellung eines neuronalen Netzes 105. Das neuronalen Netzes umfasst Knoten, auch Neuronen genannt, die Informationen von anderen Neuronen oder von außen aufnehmen, modifizieren und als Ergebnis ausgeben. Dies erfolgt über drei verschiedene Schichten, denen jeweils eine Art Neuronen zugeordnet werden kann. Das neuronale Netz umfasst eine Eingabeschicht, eine (Ausgabeschicht) und verborgene Schichten (Hidden-Neuronen).

Die Benutzereingabe INPUT wird durch die Input-Neuronen aufgenommen und durch die Benutzerausgabe OUTPUT durch Output-Neuronen ausgegeben. Die Hidden-Neuronen liegen dazwischen und bilden innere Informationsmuster des künstlichen neuronalen Netzes 105 ab. Die Neuronen sind miteinander über sogenannte Kanten verbunden. Je stärker die Verbindung ist, desto größer die Einflussnahme auf das andere Neuron. Zum Erzeugen einer Benutzerausgabe OUTPUT wird das neuronale Netz 105 zuvor mit Trainingsdaten trainiert.

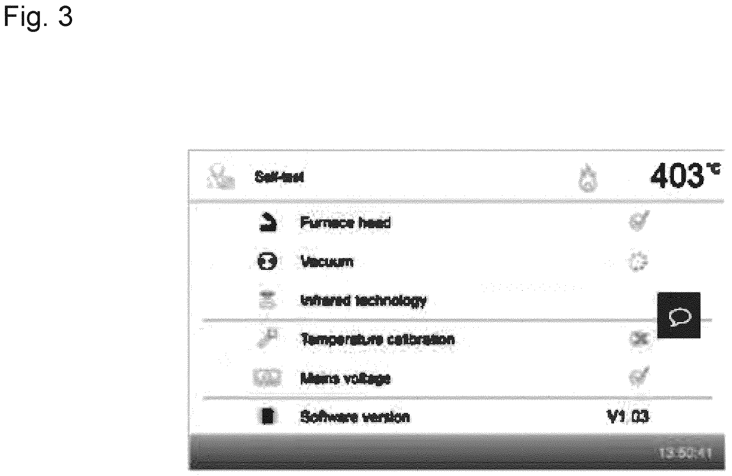

Fig. 3 zeigt ein Angebot einen Chatbot am Dentalgerät 100 in Anspruch zu nehmen, um den angezeigten Fehler bei der Temperaturkalibration zu bearbeiten. Des Weiteren können diverse Gerätedaten, wie beispielsweise Seriennummer, Softwareversion, Betriebsstunden und/oder Prozessparameter, wie beispielsweise Drehzahl, Temperatur, Druck, direkt abgefragt und für die gezielte Problemlösung mit verwendet werden. Auch statische Informationen können als Hilfe zur Ermittlung bestmöglicher Lösungen oder Hilfestellungen geeignet sein.

Weitere Daten können für eine (Remote-)Unterstützung verwendet werden. So kann bei einem Fehlerfall neben der Fehlerbezeichnung und der Nummer auch ein QR-Code an dem Dentalgerät 100 angezeigt werden, den der Benutzer einscannt und der Informationen über die weiteren Schritte erhält. Dies ist beispielsweise dann von einem technischen Vorteil, wenn das Dentalgerät nur eine kleine oder einfache Ein- oder Ausgabeschnittstelle aufweist oder aufgrund eines Batteriebetriebs diesen Umfang an Unterstützung nicht selbst leisten kann.

Weiter ist es denkbar, dass der Benutzer ein Problem oder eine Frage hat, die direkt oder indirekt das Dentalgerät 100 betrifft. Mit dieser Frage kann sich der Benutzer per Telefon/Chat an einen Servicemitarbeiter oder den Chatbot wenden. Die Person im Kundenservice oder der Chatbot kann weitere Informationen über das Dentalgerät 100 anfordern, mit denen weitergearbeitet wird. Benutzer brauchen ein Problem dann nicht nochmals im Detail von Anfang an beschreiben, da nicht hilfreiche aber bereits abgeprüfte Lösungsvorschläge sind dem Kundenservice bereits bekannt sind.

Der Benutzer kann dann am Dentalgerät 100 einen speziellen Service-QR-Code aufrufen und diesen einscannen. Die Daten werden an den Servicemitarbeiter oder den Chatbot weitergeleitet und dort ausgewertet. Dieses Vorgehen hat den Vorteil, dass auch Daten übermittelt werden können, die dem Benutzer nicht direkt zugänglich gemacht werden sollen.

Der QR-Code kann im Rahmen einer Zwei-Faktor-Authentifizierung beispielsweise den Fernzugriff auf das Dentalgerät 100 zulassen. Will beispielsweise ein Servicetechniker auf einen Ofen oder eine Fräse zugreifen, wird auf diesem Gerät ein QR-Code angezeigt. Erst wenn der Benutzer diesen QR-Code eingelesen hat, wird der Fernzugriff freigegeben.

Der Servicetechniker ist daher nicht vor Ort und kann mittels des QR-Codes und einem speziellen Computer auf die Geräteinformationen zugreifen. Da das Gerät mit dem Internet verbunden ist, kann der Servicetechniker ferngelegen (remote) auf das Gerät zugreifen. Die erforderlichen Geräteinformationen müssen nicht direkt dem Benutzer zur Verfügung gestellt werden, der diese dann fehlerfrei weitergeben muss.

Hierdurch wird eine einfache, korrekte und sichere Übertragung von relevanten und sensiblen Geräteinformationen ermöglicht, ohne dass ein Servicemitarbeiter vor Ort sein muss oder eine Internetverbindung benötigt wird. Der oben erwähnte QR-Code kann jedoch auch durch jeden anderen Code ersetzt werden, der für die Datenübermittlung geeignet ist, wie beispielsweise ein Bar-Code, ein Matrix-Code oder jede andere Art der Codierung.

Zudem können Zustandsdaten des Dentalgerätes 100 auf Basis der sprachlichen Benutzereingabe INPUT an die Ausgabeschnittstelle gesendet werden.

Weitere Zustandsdaten können unter anderem Informationen umfassen, über:
- eine Nummer zur Identifikation des jeweiligen Bearbeitungsgerätes (IOS-Daten, Gerätenummer, SoftwareVersion, Hardware-Version);
- einen Gerätestatus;
- ein verwendetes Herstellungsmaterial (LOT-Nummer, Materialbezeichnung, Materialinformation, Schichtprozess);
- eine Anzahl Betriebsstunden des Bearbeitungsgerätes;
- einen Zeitpunkt (Datum/Uhrzeit) der letzten Kalibration des Bearbeitungsgerätes;
- einen Zeitpunkt (Datum/Uhrzeit) der Fälligkeit der nächsten Kalibration;
- ein Protokoll (Log) der Prozesse, Fehlermeldungen und Warnungen;
- eine Statistik über die bei der Bearbeitung verwendeten Programme oder Aufträge;
- eine Information über einen gegenwärtig laufenden Prozess oder Prozessparameter;
- einen Auftrag, der gegenwärtig verarbeitet wird;
- Patientendaten;
- Bearbeiterdaten;
- Benutzerdaten;
- Herstellerdaten (Zahnpraxis; Zahnlabor);
- eine Auftragsbeschreibung (Art der dentalen Indikation, Farbe, Material; Größe; Menge);
- ein Datenformat (STL - Standard Tesselation Language)
- eine CAM-Materialinformation (Bezeichnung, Werkzeuge, LOT-Nr.);
- eine CAM-Geräteinformationen (Identifikationsnr., Gerätestatus, Kalibrationsstatus);
- CAM-Prozessinformationen (Frässtrategie, Bauparameter, CAM-Softwareversion);
- eine digitale Einprobe (Farbe);
- einen Öffnungszustand einer Tür eines Fräsraums (offen/geschlossen);
- einen Öffnungszustand eines Ventils (offen/geschlossen);
- einen Werkzeugzustand (vorhanden/gebrochen); und/oder
- einen Materialzustand (vorhanden/eingelegt).

Sensordaten können Informationen umfassen, über:
- physikalische Größen (Drehzahl, Temperatur, Druck, Frequenz);
- chemische Größen;
- Ableitungen der chemischen oder physikalischen Größen über die Zeit (relativ oder absolut);
- Standortdaten oder Positionsdaten;
- eine Identifikation (RFID, Barcode);
- einen Status und Signale (An, Aus); und/oder
- einen Zeitstempel.

Datenformate der Sensoren umfassen:
- Zahlen;
- Text;
- Bild (2D, 3D);
- Video (Geste);
- Audio (Sprache); und/oder
- Status (True, False).

Aufgaben, die mit Hilfe der Sensoren oder Sensordaten ausgeführt werden, umfassen:
- Steuerung und Planung (Control and Planning);
- Verfolgung (Track and Trace);
- Visuelle Inaugenscheinnahme (Visual Inspection);
- Dokumentation;
- Führung und Hilfe (Guide and Help);
- Unterstützung (Support); und/oder
- Werkzeuge und Eigenschaften (Tools and Features, wie beispielsweise eine Lupe).

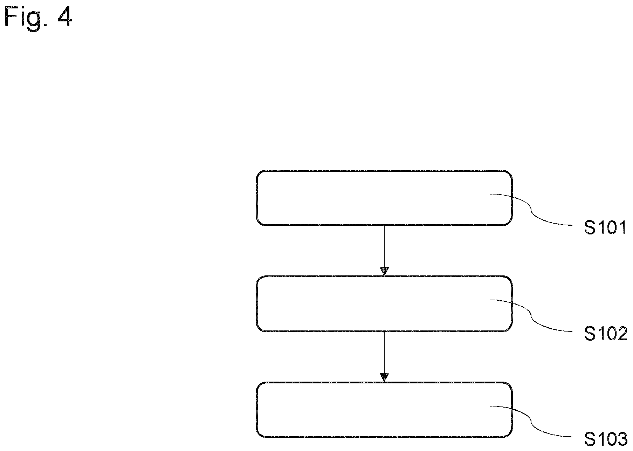

Fig. 4 zeigt ein Blockdiagramm eines Verfahrens für ein Dentalgerätesystem 200. Im Schritt S101 wird die sprachliche Benutzereingabe INPUT über die Eingabeschnittstelle 101-I eingegeben. In Schritt S102 wird eine sprachliche Benutzerausgabe OUTPUT auf Basis der Benutzereingabe INPUT durch eine elektronischen Verarbeitungsvorrichtung 103 ermittelt. In Schritt S103 wird die sprachliche

Benutzerausgabe OUTPUT über eine Ausgabeschnittstelle 101-O ausgegeben.

Durch das Verfahren erfolgt eine schnelle, zuverlässige und treffsichere Hilfe für die Benutzer. Zudem können weitere Informationen über Benutzerverhalten erhalten werden. In diesem Zusammenhang kann ermittelt werden, welche Funktionen des Dentalgerätes 100 Probleme bereiten. Bei einer externen Verbindung kann eine individuelle Lösungsempfehlung je nach Ausbildungsstand des Service- oder Vertriebsmitarbeiters erhalten werden.

Das System kann über und von dem Benutzer lernen. Ein Wissen über die Problemlösung, das bisher auf einige wenige Experten verteilt ist und undokumentiertes Wissen von Experten wird automatisch digitalisiert. Das Dentalgerätesystem 200 kann somit dynamisch aus den Problemen oder der Anwendung durch Benutzer lernen.

Die Vorteile des Dentalgerätesystems 200 und des entsprechenden Verfahrens sind ein schneller und unkomplizierter Support und ein Erfassen von Informationen zur Optimierung des Leistungsangebotes des Chatbots und zur Erhöhung der Treffsicherheit der Aussagen (Expertensystem).

Der Benutzer muss den Status und das Fehlverhalten des Dentalgerätes 100 nicht manuell erfassen und dem Support mitteilen, da dies automatisch erfolgt. Es werden automatisch Erkenntnisse über das Nutzungsverhalten und über Schwachstellen bei Bedienung, ein Verständnis des Konzeptes oder des Dentalgerätes an sich erhalten. Servicestellen von Außendienstmitarbeitern oder Experten werden durch Automatisierung und Erhöhung der Verfügbarkeit und der Lösungskompetenz entlastet. Es erfolgt eine beschleunigte Abarbeitung bei schwierigen oder neuen Anfragen.

Produktprobleme, die durch eine schlechte Materialcharge oder eine Abweichung von Spezifikationen ausgelöst werden, können früh erkannt werden. Es erfolgt ein aktives Lernen auf Hersteller und auf Benutzerseite. Des Weiteren erfolgt eine automatisierte Dokumentation von Vorgängen in CRM-Systemen. Eine Bereitstellung des Chatbots kann als bezahlungspflichtige Zusatzoption im Rahmen eines Servicevertrages erfolgen.

Es entstehen keine Wartezeiten auf einen freien Supportmitarbeiter. Durch ein automatisches Ermitteln der Benutzerausgabe, kann ein zeitaufwändiges Suchen nach relevanten Informationen sowohl durch den Benutzer als auch durch den Supportmitarbeiter verhindert werden. Hierdurch können wechselseitige Frage-Antwort-Kaskaden zwischen Benutzer, Support, und 2nd Level Support vermieden werden.

Durch den Chatbot wird zudem die Hemmschwelle gesenkt, um eine Supportanfrage zu stellen. Da eine Chatbot-Anfrage jederzeit abgebrochen werden kann, fühlt sich der Benutzer nicht verpflichtet, auf die Rückfragen des Kundensupport zu antworten. Zudem wird eine schnelle Hilfe von den Benutzern geschätzt, da im Falle von Zahnärzten Patienten während den Benutzereingaben am Stuhl warten oder im Falle von Zahntechnikern diese ihren Liefertermin einhalten können.

Ein weiterer Vorteil ist der niederschwellige Zugang, da der Benutzer beispielsweise keine Kontaktdaten des Herstellers heraussuchen muss. In der Interaktion mit einem Chatbot ist der Kunde eher bereit auch Basisinformationen wie Chargennummern von verwendeten Materialien einzugeben. Gegebenenfalls kann das Dentalgerät 100 dabei Unterstützung leisten, wenn dieses derartige Informationen bereits mittels interner Sensoren erfasst hat, wie beispielsweise einer RFID-Schaltung, einem Sensor oder einer Kamera.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Dentalgerät
- 101-I: Eingabeschnittstelle
- 101-O: Ausgabeschnittstelle
- 103: Verarbeitungsvorrichtung
- 105: Neuronales Netz

- 200: Dentalgerätesystem

## Patentansprüche

1. Dentalgerätesystem (200), mit:
- einer Eingabeschnittstelle (101-I) zum Eingeben einer sprachlichen Benutzereingabe (INPUT);
- einer elektronischen Verarbeitungsvorrichtung (103) zum Ermitteln einer sprachlichen Benutzerausgabe (OUTPUT) auf Basis der Benutzereingabe (INPUT); und
- einer Ausgabeschnittstelle (101-O) zum Ausgeben der sprachlichen Benutzerausgabe (OUTPUT).

2. Dentalgerätesystem (200) nach Anspruch 1, wobei die elektronische Verarbeitungsvorrichtung (103), die Eingabeschnittstelle (101-I) und/oder die Ausgabeschnittstelle (101-O) in einem Dentalgerät (100) gebildet ist.

3. Dentalgerätesystem (200) nach einem der vorangehenden Ansprüche, wobei Verarbeitungsvorrichtung (103) auf einem Internetknoten gebildet ist.

4. Dentalgerätesystem (200) nach einem der vorangehenden Ansprüche, wobei die Verarbeitungsvorrichtung (103) ausgebildet ist, eine Funktion eines Dentalgerätes (100) auf Basis der sprachlichen Benutzereingabe (INPUT) zu steuern.

5. Dentalgerätesystem (200) nach einem der vorangehenden Ansprüche, wobei die Verarbeitungsvorrichtung (103) ausgebildet ist, Zustandsdaten des Dentalgerätes (100) auf Basis der sprachlichen Benutzereingabe (INPUT) an die Ausgabeschnittstelle (101-O) zu senden.

6. Dentalgerätesystem (200) nach einem der vorangehenden Ansprüche, wobei die Verarbeitungsvorrichtung (103) ein neuronales Netz (105) oder ein Expertensystem zum Ermitteln der sprachlichen Benutzerausgabe (OUTPUT) auf Basis der Benutzereingabe (INPUT) umfasst.

7. Dentalgerätesystem (200) nach einem der vorangehenden Ansprüche, wobei die Eingabeschnittstelle (101-I) eine textbasierte, visuelle, gestische oder eine sprachbasierte Schnittstelle ist und/oder die Ausgabeschnittstelle (101-O) eine textbasierte, visuelle oder eine sprachbasierte Schnittstelle ist.

8. Dentalgerätesystem (200) nach einem der vorangehenden Ansprüche, wobei das Dentalgerät (100) ein Fräsgerät, ein 3D-Drucker, ein Brennofen; ein Pressofen, ein Sinterofen, ein Scanner, ein Lichthärtegerät, ein Nachbelichtungsgerät, ein Mischsystem, ein Farbmesssystem, ein Polymerisationsgerät, ein Sterilisationsgerät, ein Handstück des Zahntechnikers oder ein Reinigungsgerät ist.

9. Dentalgerät (100), mit:
- einer Eingabeschnittstelle (101-I) zum Eingeben einer sprachlichen Benutzereingabe (INPUT);
- einer elektronischen Verarbeitungsvorrichtung (103) zum Ermitteln einer sprachlichen Benutzerausgabe (OUTPUT) auf Basis der Benutzereingabe (INPUT); und
- einer Ausgabeschnittstelle (101-O) zum Ausgeben der sprachlichen Benutzerausgabe (OUTPUT).

10. Verfahren für ein Dentalgerätesystem (200), mit den Schritten:
- Eingeben (S101) einer sprachlichen Benutzereingabe (INPUT) über eine Eingabeschnittstelle (101-I);
- Ermitteln (S102) einer sprachlichen Benutzerausgabe (OUTPUT) auf Basis der Benutzereingabe (INPUT) durch eine elektronischen Verarbeitungsvorrichtung (103); und
- Ausgeben (S103) der sprachlichen Benutzerausgabe (OUTPUT) über eine Ausgabeschnittstelle (101-0).

11. Verfahren für ein Dentalgerätesystem (200) nach Anspruch 10, wobei eine Funktion eines Dentalgerätes (100) auf Basis der sprachlichen Benutzereingabe (INPUT) gesteuert wird.

12. Verfahren für ein Dentalgerätesystem (200) nach Anspruch 10 oder 11, wobei Zustandsdaten des Dentalgerätes (100) auf Basis der sprachlichen Benutzereingabe (INPUT) an die Ausgabeschnittstelle (101-O) gesendet werden und/oder Sensordaten des Dentalgerätes (100) in der Benutzereingabe (INPUT) integriert werden.

13. Verfahren für ein Dentalgerätesystem (200) nach einem der Ansprüche 10 bis 12, wobei sich das Dentalgerät (100) in Reaktion auf die sprachlichen Benutzereingabe (INPUT) automatisch mit einem Serviceknoten verbindet.

14. Verfahren für ein Dentalgerätesystem (200) nach einem der Ansprüche 10 bis 13, wobei die sprachliche Benutzereingabe (INPUT) an eine Verarbeitungsvorrichtung (103) auf einem Internetknoten gesendet wird und/oder die sprachliche Benutzerausgabe (OUTPUT) von einem Internetknoten empfangen wird.

15. Verfahren für ein Dentalgerätesystem (200) nach einem der Ansprüche 10 bis 14, wobei die sprachliche Benutzerausgabe (OUTPUT) oder die Benutzereingabe (INPUT) durch ein neuronales Netz (105) oder ein Expertensystem auf Basis der Benutzereingabe (INPUT) ermittelt wird.
